# EUROPEAN PATENT APPLICATION

(11) **EP 3 489 867 A1**
(43) Date of publication of application: **29.05.2019**
(21) Application number: 18205649.9
(22) Date of filing: 12.11.2018
(51) Int. Cl.: G06Q 10/04, G06Q 50/30, G05D 1/00

(54) **SYSTEM, SERVER, AND METHOD FOR DISPATCHING AN AUTONOMOUS VEHICLE**

(30) Priority: 28.11.2017 JP 2017227994
(71) Applicant: TOYOTA JIDOSHA KABUSHIKI KAISHA, Toyota-shi, Aichi-ken, 471-8571 (JP)
(72) Inventor: KATAOKA, Naomi, Toyota-shi, Aichi-ken,, 471-8571 (JP)
(74) Representative: Winter, Brandl, Fürniss, Hübner, Röss, Kaiser, Polte - Partnerschaft mbB

(57) **Abstract**

A vehicle (100) is configured to perform unmanned driving. A controller of the vehicle (100) is configured to control the vehicle (100) to reach a dispatch location at a dispatch time. The dispatch time is modified in accordance with an arrival time of a user to the dispatch location, the arrival time being predicted based on an activity performed by the user when the user moves to the dispatch location without riding on the vehicle (100). The controller of the vehicle (100) is configured to control the vehicle (100) to reach the dispatch location at the dispatch time modified in accordance with the arrival time of the user to the dispatch location.

## Description

This nonprovisional application is based on Japanese Patent Application No. 2017-227994 filed on November 28, 2017, with the Japan Patent Office, the entire contents of which are hereby incorporated by reference.

### BACKGROUND

### Field

The present disclosure relates to a movable body, a dispatch system, a server, and a method for dispatching the movable body. In particular, the present disclosure relates to: a movable body configured to perform unmanned driving; a dispatch system employing the movable body; a server used for the dispatch system; and a method for dispatching the movable body configured to perform unmanned driving.

### Description of the Background Art

In recent years, development of automated driving technique has been progressed rapidly, and services utilizing movable bodies capable of automated driving have been proposed. For example, Japanese Patent Laying-Open No. 2015-191351 discloses a transportation system for operating a movable body configured to perform automated driving, so as to carry a user or a baggage.

In this transportation system, arrangements are made for dispatch of a movable body to the user and for a staff who operates the movable body in order to reduce uneasiness of the user who utilizes the movable body configured to perform automated driving (see Japanese Patent Laying-Open No. 2015-191351).

When a movable body is configured to perform unmanned driving, the following case can be considered: desired dispatch location and dispatch time are designated, a movable body is dispatched to reach the designated dispatch location at the designated dispatch time, and a user utilizes the movable body from the dispatch location. For example, the following use case can be considered: on a way to home from an office or the like, a user designates, as the dispatch location, a station where the user will get off so as to dispatch a movable body to reach the station at the designated time, and the user goes home from the station using the movable body.

However, the user may not reach the dispatch location at the designated time due to delay of a train, the user's traveling speed, or the like. It is inconvenient that the dispatched movable body reaches the dispatch location at a time after the arrival of the user. On the other hand, when the dispatched movable body reaches the dispatch location too early, a problem may arise in terms of parking of the movable body. In Japanese Patent Laying-Open No. 2015-191351, the above-described use case for the movable body and the resultant problem are not particularly discussed.

### SUMMARY

The present disclosure has been made to solve such a problem, and has an object to dispatch a movable body configured to perform unmanned driving, to a designated dispatch location at an appropriate time.

A movable body according to the present disclosure is a movable body configured to perform unmanned driving, and includes a communication device and a controller. The communication device is configured to receive a dispatch instruction indicating a dispatch location and a dispatch time for the movable body. The controller is configured to control the movable body to reach the dispatch location at the dispatch time. The dispatch time is modified in accordance with an arrival time of a user to the dispatch location, the arrival time being predicted based on an activity performed by the user when the user moves to the dispatch location without riding on the movable body. The controller is configured to control the movable body to reach the dispatch location at the dispatch time modified in accordance with the arrival time of the user to the dispatch location.

In this movable body, the dispatch time for the movable body is modified in accordance with the arrival time of the user, which is predicted from the activity of the user, to the dispatch location, and the movable body reaches the dispatch location at the modified dispatch time. That is, the activity of the user (delay of the train utilized by the user, the walking speed of the user, and the like) is reflected in the dispatch time. Therefore, according to this movable body, the movable body configured to perform unmanned driving can be dispatched to reach a designated dispatch location at an appropriate time, whereby a degree of satisfaction of the user is improved.

The activity of the user may be predicted using at least one of location information of a mobile terminal of the user, a service status of a train utilized by the user to move to the dispatch location, traffic information for a vehicle utilized by the user to move to the dispatch location, and location information of the user specified from an image of the user, the image being captured using a camera.

Accordingly, the activity of the user can be predicted precisely. Therefore, the movable body configured to perform unmanned driving can be dispatched to reach the designated dispatch location at an appropriate time precisely.

Further, a dispatch system according to the present disclosure includes: a movable body and a server configured to communicate with the movable body. The movable body is configured to perform unmanned driving and configured to move in accordance with a designated dispatch location and a designated dispatch time. The server is configured to: predict an arrival time of a user to the dispatch location based on an activity performed by the user when the user moves to the dispatch location without riding on the movable body, and; and modify the dispatch time for the movable body in accordance with the predicted arrival time of the user. The movable body is configured to move toward the dispatch location to reach the dispatch location at the modified dispatch time.

Further, a server according to the present disclosure includes a communication device and a processor. The communication device is configured to communicate with a movable body, the movable body being configured to perform unmanned driving and move in accordance with a designated dispatch location and a designated dispatch time. The processor is configured to perform first and second processes. The first process is a process for predicting an arrival time of a user to the dispatch location based on an activity performed by the user when the user moves to the dispatch location without riding on the movable body. The second process is a process for transmitting the dispatch time for the movable body to the movable body via the communication device, the dispatch time being modified in accordance with the predicted arrival time of the user.

Further, a dispatch method according to the present disclosure is a method for dispatching a movable body configured to perform unmanned driving, and includes: moving the movable body in accordance with a designated dispatch location and a designated dispatch time; predicting an arrival time of a user to the dispatch location based on an activity performed by the user when the user moves to the dispatch location without riding on the movable body; and moving the movable body toward the dispatch location to reach the dispatch location at the dispatch time modified in accordance with the predicted arrival time of the user.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 schematically shows an entire configuration of a dispatch system.
Fig. 2 illustrates a utilization manner of the dispatch system.
Fig. 3 shows an exemplary configuration of the vehicle.
Fig. 4 shows configurations of a controller of the vehicle and a management server in detail.
Fig. 5 is a sequence diagram showing exchange of information among respective elements of the dispatch system according to the first embodiment.
Fig. 6 shows a configuration of data stored in a user information DB of the management server.
Fig. 7 shows a configuration of data stored in a vehicle information DB of the management server.
Fig. 8 is a flowchart for illustrating a procedure of processes performed by a processor of the management server.
Fig. 9 is a flowchart for illustrating a procedure of processes performed by a controller of the vehicle.
Fig. 10 is a sequence diagram showing exchange of information among respective elements of a dispatch system according to a second embodiment.
Fig. 11 is a flowchart for illustrating a procedure of processes performed by a processor of a management server according to the second embodiment.

### DESCRIPTION OF THE PREFERRED EMBODIMENTS

The following describes embodiments of the present disclosure with reference to figures in detail. It should be noted that the same or corresponding portions are given the same reference characters and are not described repeatedly.

### [First Embodiment]

### <System Configuration>

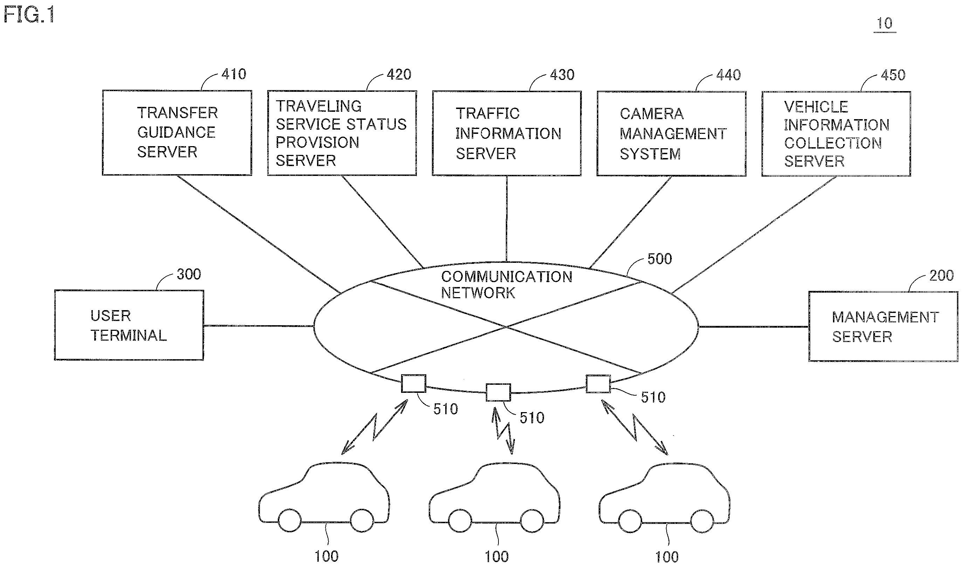

Fig. 1 schematically shows an entire configuration of a dispatch system 10 according to a first embodiment. With reference to Fig. 1, dispatch system 10 includes a plurality of electrically powered vehicles (hereinafter, also simply referred to as "vehicles") 100, a management server 200, and a user terminal 300. Moreover, dispatch system 10 further includes a transfer guidance server 410, a traveling service status provision server 420, a traffic information server 430, a camera management system 440, and a vehicle information collection server 450.

Each vehicle 100, management server 200, user terminal 300, transfer guidance server 410, traveling service status provision server 420, traffic information server 430, camera management system 440, and vehicle information collection server 450 are configured to communicate with one another via a communication network 500 such as the Internet or a telephone line. It should be noted that each vehicle 100 is configured to send and receive information to and from a base station 510 of communication network 500 through wireless communication.

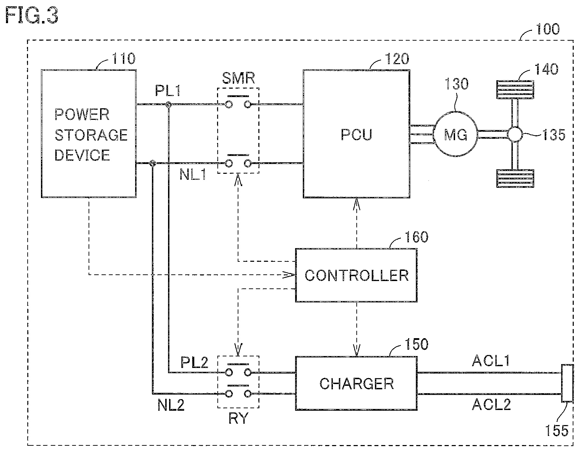

Vehicle 100 is a movable body configured to perform unmanned driving. Vehicle 100 is configured to generate driving power for traveling using electric power from a power storage device mounted thereon as described below with reference to Fig. 3. In this first embodiment, vehicle 100 is further configured to allow the power storage device to be charged using electric power supplied from a power supply external to the vehicle, and vehicle 100 is an electric vehicle, a so-called plug-in hybrid vehicle, or the like, for example. It should be noted that vehicle 100 is not necessarily limited to such a vehicle having a power storage device that can be charged using a power supply external to the vehicle, and may be a hybrid vehicle that does not have such a charging function.

Management server 200 is configured to exchange various types of information among each vehicle 100, user terminal 300, transfer guidance server 410, traveling service status provision server 420, traffic information server 430, camera management system 440, and vehicle information collection server 450. Operations of management server 200 will be described in detail later.

User terminal 300 is a mobile terminal of a user who utilizes dispatch system 10, such as a smartphone, for example. User terminal 300 has a GPS (Global Positioning System) receiver (not shown) for specifying the location of user terminal 300 (i.e., the location of the user) based on electric waves from satellites, and notifies the location information of user terminal 300 (user) to management server 200. Further, the user who wishes to utilize dispatch system 10 can make an application from user terminal 300 so as to utilize vehicle 100.

Transfer guidance server 410, traveling service status provision server 420, traffic information server 430, camera management system 440, and vehicle information collection server 450 are used to predict an activity of the user who utilizes dispatch system 10. This dispatch system 10 assumes the following case: the user designates a dispatch location and a dispatch time for vehicle 100, moves to reach the designated dispatch location at the designated dispatch time using transportation such as a train, and then the user utilizes vehicle 100 from the dispatch location. Then, an activity of the user (delay in the transportation, walking speed of the user, or the like) is predicted using the various types of information provided from transfer guidance server 410, traveling service status provision server 420, traffic information server 430, camera management system 440, and vehicle information collection server 450. Based on the activity of the user, the arrival time of the user to the dispatch location is predicted.

When the user moves to the dispatch location for vehicle 100 using the transportation such as a train, transfer guidance server 410 provides a traveling route, transportation to be utilized, utilization time, and the like. For this transfer guidance server 410, there can be employed various types of known transfer guidance servers each for providing a transfer guidance service for public transportation or the like.

When the user moves to the dispatch location for vehicle 100 using a train or bus, traveling service status provision server 420 provides a status of service of the train or bus (delay information or the like). For this traveling service status provision server 420, there can be employed various types of known traveling service status provision servers provided by a railroad company, a bus service company, and the like.

When the user moves to the dispatch location of vehicle 100 using a bus or taxi, traffic information server 430 provides traffic information generated from detection values of various sensors provided at a road, such as a traffic amount and traffic congestion condition of the road. For this traffic information server 430, there can be also employed various types of known traffic information servers each for providing a traffic information service for roads.

For example, camera management system 440 is configured to include a multiplicity of outdoor surveillance cameras, and can capture an image of a user who is moving outdoors. Moreover, camera management system 440 may include an in-vehicle camera mounted on a taxi or bus and configured to capture an image of a user in the taxi or bus. Each camera included in camera management system 440 has an image-capturing precision to such an extent that the face of the user can be discerned.

When the user moves to the dispatch location of vehicle 100 using the bus or the taxi, vehicle information collection server 450 provides traffic information (congestion information or the like) generated from information such as vehicle locations, vehicle speeds, and the like collected from other vehicles. For this vehicle information collection server 450, there can be employed various types of known probe traffic information servers each configured to provide probe traffic information.

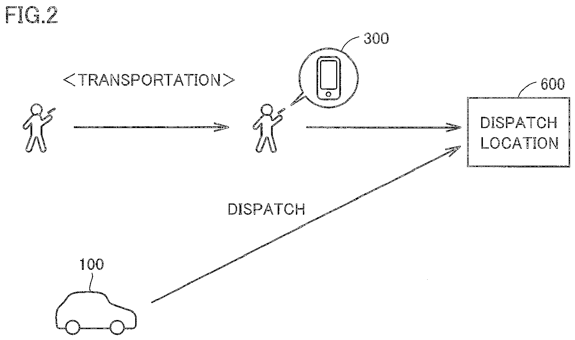

Fig. 2 illustrates a utilization manner of dispatch system 10. With reference to Fig. 2, according to dispatch system 10, for example, the following service can be provided: on a way to the home from an office or the like, the user designates, as a dispatch location 600, a station where the user will get off so as to dispatch vehicle 100 to reach the station at a designated time, and utilizes vehicle 100 from the station to the home. Alternatively, the following service can be provided: the user, who did shopping in a shopping center or the like, puts a baggage with purchased items onto vehicle 100, and designates a delivery destination (home) and a delivery time so as to deliver the baggage to the home using vehicle 100 configured to perform unmanned driving. The user does not ride on vehicle 100, moves to the home using transportation such as a train, a bus, or a taxi, and receives the baggage from vehicle 100 at the home.

However, the user may not reach the dispatch location at the designated time due to delay of the transportation utilized by the user, the traveling speed of the user, or the like. For dispatch system 10, it is inconvenient that dispatched vehicle 100 reaches the dispatch location at a time after the arrival of the user. On the other hand, when dispatched vehicle 100 reaches the dispatch location at a time much earlier than the arrival of the user, a problem may arise in terms of parking of vehicle 100.

In view of this, in dispatch system 10 according to the first embodiment, the activity of the user until the user reaches the dispatch location is predicted using: the location information of user terminal 300 that can specify the location of the user; and the information from transfer guidance server 410, traveling service status provision server 420, traffic information server 430, camera management system 440, vehicle information collection server 450, and the like. For example, the delay of the transportation utilized by the user, the walking speed of the user, and the like are predicted. Based on the activity of the user, the arrival time of the user to the dispatch location for vehicle 100 is predicted and the dispatch time for vehicle 100 is modified in accordance with the arrival time of the user. As such, according to this dispatch system 10, the activity of the user (the delay of the transportation utilized by the user, the walking speed of the user, or the like) is reflected in the dispatch time for vehicle 100, whereby vehicle 100 can be dispatched in accordance with the arrival time of the user to the dispatch location.

Fig. 3 shows an exemplary configuration of vehicle 100. With reference to Fig. 3, vehicle 100 includes power storage device 110, a system main relay SMR, a PCU (Power Control Unit) 120, a motor generator 130, a power transmission gear 135, and driving wheels 140. Moreover, vehicle 100 further includes a charger 150, an inlet 155, a charging relay RY, and a controller 160.

Power storage device 110 is a power storage component configured to be chargeable/dischargeable. Power storage device 110 is configured to include a secondary battery such as a lithium ion battery or a nickel-hydrogen battery, or include a power storage element such as an electric double layer capacitor, for example. Via system main relay SMR, power storage device 110 supplies PCU 120 with electric power for generating driving power of vehicle 100. Further, power storage device 110 stores electric power generated by motor generator 130.

PCU 120 is a driving device for driving motor generator 130, and is configured to include a power converting device such as a converter, an inverter, or the like (all not shown). PCU 120 is controlled by a control signal from controller 160 and converts DC power received from power storage device 110 into AC power for driving motor generator 130.

Motor generator 130 is an AC rotating electrical machine, such as a permanent-magnet type synchronous motor including a rotor having a permanent magnet embedded therein. Output torque from motor generator 130 is transmitted to driving wheels 140 via power transmission gear 135, which is constituted of a speed reducer and a power split device. In this way, vehicle 100 travels. Moreover, motor generator 130 is capable of generating electric power using rotation power of driving wheels 140 when vehicle 100 operates for braking. The electric power thus generated is converted by PCU 120 into charging power for power storage device 110.

It should be noted that in a hybrid vehicle including an engine (not shown) in addition to motor generator 130, required vehicle driving power is generated by operating the engine and motor generator 130 cooperatively. In this case, power storage device 110 can be charged using electric power generated by rotation of the engine.

Charger 150 is connected to power storage device 110 through charging relay RY. Moreover, charger 150 is connected to inlet 155 by power lines ACL 1, ACL 2. Charger 150 converts electric power supplied from the power supply, which is external to the vehicle and electrically connected to inlet 155, into electric power with which power storage device 110 can be charged.

Controller 160 includes an ECU (Electronic Control Unit), various sensors, and a navigation device, a communication module, and the like (not shown in Fig. 2), receives signals from a sensor group, outputs a control signal to each device, and controls vehicle 100 and each device. Controller 160 performs various types of control for performing unmanned driving of vehicle 100 (such as driving control, braking control, and steering control). Controller 160 generates control signals for controlling PCU 120, a steering device not shown in the figure, charger 150, and the like.

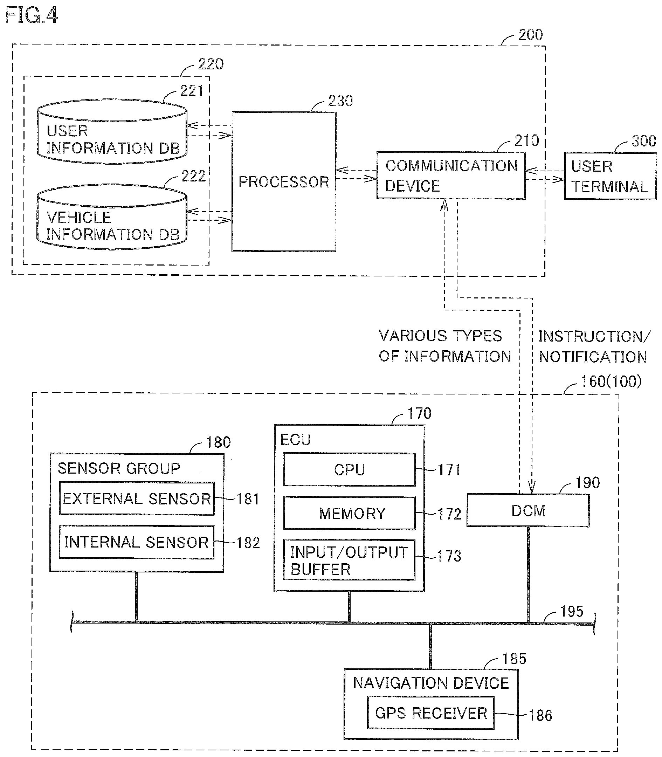

Fig. 4 shows configurations of controller 160 of vehicle 100 and management server 200 in detail. With reference to Fig. 4, controller 160 of vehicle 100 includes an ECU 170, a sensor group 180, a navigation device 185, and a communication module 190. ECU 170, sensor group 180, navigation device 185, and communication module 190 are connected to one another via an in-vehicle wired network 195 such as a CAN (Controller Area Network).

ECU 170 is configured to include a CPU (Central Processing Unit) 171, a memory 172, and an input/output buffer 173. In response to a signal from each sensor of sensor group 180, ECU 170 controls devices to bring vehicle 100 into a desired state. For example, ECU 170 performs various types of control for implementing the unmanned driving of vehicle 100 by controlling PCU 120 (Fig. 3) serving as a driving device and the steering device (not shown).

It should be noted that the term "unmanned driving" refers to driving in which driving operations of vehicle 100 such as acceleration, deceleration, and steering are performed without driving operations by a driver. Specifically, this vehicle 100 is configured to perform full-automated driving defined as "Level 5". That is, in the unmanned driving by ECU 170, a driver does not need to ride on the vehicle under all the situations.

Therefore, controller 160 includes sensor group 180 to detect situations inside and outside vehicle 100. Sensor group 180 includes: an external sensor 181 configured to detect a situation outside vehicle 100; and an internal sensor 182 configured to detect information corresponding to a traveling state of vehicle 100 and detect a steering operation, an accelerating operation, and a braking operation.

External sensor 181 includes a camera, a radar, a LIDAR (Laser Imaging Detection And Ranging), and the like, for example (all not shown). The camera captures an image of a situation outside vehicle 100 and outputs, to ECU 170, captured-image information regarding the situation outside vehicle 100. The radar transmits electric wave (for example, millimeter wave) to surroundings of vehicle 100 and receives electric wave reflected by an obstacle to detect the obstacle. Then, the radar outputs, to ECU 170, a distance to the obstacle and a direction of the obstacle as obstacle information regarding the obstacle. The LIDAR transmits light (typically, ultraviolet rays, visible rays, or near infrared rays) to surroundings of vehicle 100 and receives light reflected by an obstacle to measure a distance to the reflecting point and detect the obstacle. The LIDAR outputs, to ECU 170, the distance to the obstacle and a direction of the obstacle as obstacle information, for example.

Internal sensor 182 includes a vehicle speed sensor, an acceleration sensor, a yaw rate sensor, and the like, for example (all not shown). The vehicle speed sensor is provided at a wheel of vehicle 100 or a drive shaft that is rotated together with the wheel, detects a rotating speed of the wheel, and outputs vehicle speed information including the speed of vehicle 100 to ECU 170. The acceleration sensor includes: a forward/backward acceleration sensor configured to detect acceleration in a forward/backward direction of vehicle 100; and a lateral acceleration sensor configured to detect lateral acceleration of vehicle 100, for example. The acceleration sensor outputs acceleration information including both the accelerations to ECU 170. The yaw rate sensor detects a yaw rate (rotation angle speed) around the vertical axis of the center of gravity of vehicle 100. The yaw rate sensor is, for example, a gyro sensor, and outputs yaw rate information including the yaw rate of vehicle 100 to ECU 170.

Navigation device 185 includes a GPS receiver 186 configured to specify a location of vehicle 100 based on electric waves from satellites. Navigation device 185 performs various types of navigation processes of vehicle 100 using the location information (GPS information) of vehicle 100 specified by GPS receiver 186. Specifically, navigation device 185 calculates a traveling route (expected traveling route or target route) from the current location of vehicle 100 to a destination based on GPS information of vehicle 100 and a road map data stored in the memory (not shown), and outputs information of the target route to ECU 170. It should be noted that during the utilization of vehicle 100 by the user, navigation device 185 notifies the target route to the user by way of presentation on a display and audio output from a speaker (both not shown).

Communication module 190 is an in-vehicle DCM (Data Communication Module), and is configured to perform bidirectional data communication with a communication device 210 of management server 200 via communication network 500 (Fig. 1).

Management server 200 includes communication device 210, a storage device 220, and a processor 230. Communication device 210 is configured to perform bidirectional data communication with communication module 190 of vehicle 100 and user terminal 300 via communication network 500 (Fig. 1). Although not shown, communication device 210 is configured to perform data communication with transfer guidance server 410, traveling service status provision server 420, traffic information server 430, camera management system 440, and vehicle information collection server 450 via communication network 500.

Storage device 220 includes a user information database (DB) 221 and a vehicle information database (DB) 222. User information DB 221 stores information of a user who utilizes dispatch system 10. A user who wishes to utilize dispatch system 10 can utilize dispatch system 10 by registering himself/herself as a member in advance, and information of the user who has registered as a member is stored in user information DB 221. A data configuration of user information DB 221 will be described later.

Vehicle information DB 222 stores information of each vehicle 100 utilized in dispatch system 10. Each vehicle 100 to be utilized in dispatch system 10 can be utilized in dispatch system 10 through a registration procedure in advance. Information of registered vehicle 100 is stored in vehicle information DB 222. A data configuration of vehicle information DB 222 will also be described later.

When processor 230 receives a utilization reservation for vehicle 100 from user terminal 300, processor 230 associates information regarding the reservation (dispatch location, dispatch time, and the like) with the information of the user of user terminal 300, and stores it in user information DB 221. Moreover, based on the vehicle information stored in vehicle information DB 222, processor 230 transmits, to an unutilized vehicle 100 (waiting to be dispatched), a dispatch instruction for instructing vehicle 100 to be dispatched and reach the dispatch location at the dispatch time as designated upon making the reservation.

Moreover, processor 230 receives location information from user terminal 300, and collects information regarding the activity of the user from at least any of transfer guidance server 410, traveling service status provision server 420, traffic information server 430, camera management system 440, and vehicle information collection server 450.

For example, based on the location information from user terminal 300, the current location of the user and the traveling speed (walking speed or the like) of the user can be detected. Moreover, when the user moves to the dispatch location for vehicle 100 using transportation such as a train, the traveling path and expected arrival time of the user can be searched for using the service provided by transfer guidance server 410, and delay in the arrival time of the user due to a service status of the train or bus can be also predicted using the service provided by traveling service status provision server 420.

Moreover, when the user moves to the dispatch location for vehicle 100 using the bus or taxi, deviation of the arrival time of the user can be predicted using the traffic information (congestion information or the like) provided by traffic information server 430 or vehicle information collection server 450. Moreover, the location information of the user can be obtained by detecting, using an image recognition technique, the user based on an image captured by camera management system 440.

Further, processor 230 predicts the activity of the user using the information collected from user terminal 300, transfer guidance server 410, traveling service status provision server 420, traffic information server 430, camera management system 440, vehicle information collection server 450, and the like, and predicts the arrival time of the user to the dispatch location of vehicle 100 based on the activity of the user. Based on the predicted arrival time of the user, processor 230 modifies the dispatch time designated when making the reservation, and notifies the modified dispatch time to vehicle 100.

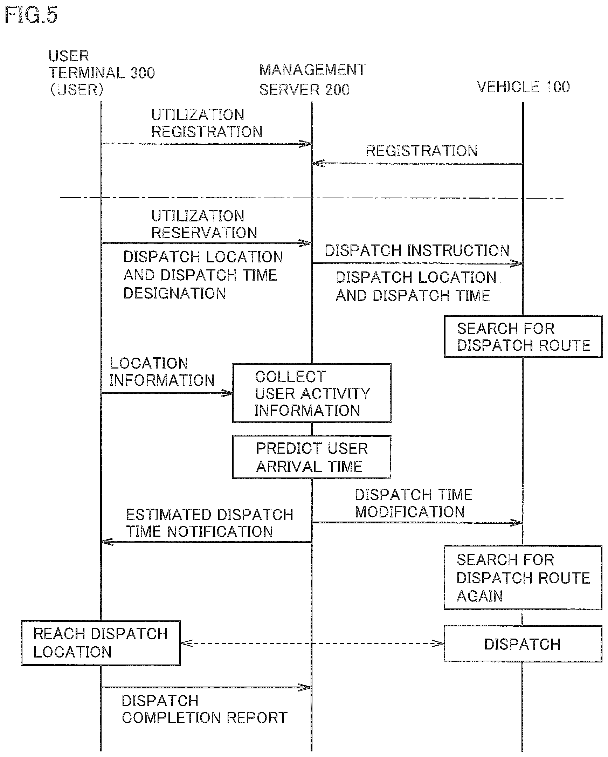

Fig. 5 is a sequence diagram showing exchange of information among respective elements (vehicle 100, management server 200, and user terminal 300) of dispatch system 10 according to the first embodiment. It should be noted that although not shown in Fig. 5, actually, management server 200 exchanges information with transfer guidance server 410, traveling service status provision server 420, traffic information server 430, camera management system 440, and vehicle information collection server 450.

With reference to Fig. 5, the user who is to utilize dispatch system 10 needs to make a utilization application for the system in advance. For example, utilization registration information is transmitted from user terminal 300 to management server 200. Moreover, vehicles 100 to be utilized in dispatch system 10 are also registered in advance, and pieces of information of vehicles 100 are registered in management server 200.

The user who is to utilize dispatch system 10 makes a utilization reservation from user terminal 300. When information for specifying the user is input to user terminal 300 and dispatch location and dispatch time are designated, the designated dispatch location and dispatch time are transmitted from user terminal 300 to management server 200.

When management server 200 receives the dispatch location and dispatch time from user terminal 300, management server 200 assumes the received dispatch location and dispatch time as reservation information from the user, associates them with the ID of the user, and stores them in user information DB 221. Then, management server 200 makes reference to vehicle information DB 222 to select a vehicle 100 that can be dispatched, and transmits, to vehicle 100, a dispatch instruction indicating the designated dispatching location and dispatching time.

When vehicle 100 receives the dispatch instruction from management server 200, vehicle 100 searches for a dispatch route (traveling route) from the current location to the dispatch location to allow vehicle 100 to reach the designated dispatch location at the designated dispatch time. Then, vehicle 100 starts to move toward the dispatch location in accordance with the searched dispatch route.

On the other hand, the user who made the utilization reservation moves to the designated dispatch location using means such as a train, a bus, a taxi, or walking. While the user is moving toward the dispatch location, the location information is transmitted from user terminal 300 to management server 200 and user activity information for predicting an activity of the user who is moving is collected in management server 200. In addition to this, depending on the traveling means utilized by the user, various types of information are appropriately transmitted to management server 200 also from transfer guidance server 410, traveling service status provision server 420, traffic information server 430, camera management system 440, and vehicle information collection server 450, whereby user activity information is collected.

Then, based on the collected user activity information, management server 200 predicts the user arrival time at which the user will reach the dispatch location (that is, the user arrival location) designated upon making the utilization reservation. For example, when the user moves to the dispatch location using a train, management server 200 may predict the user arrival time from a transfer time provided by transfer guidance server 410, and may modify the user arrival time in accordance with the train service status (delay information or the like) provided by traveling service status provision server 420. Alternatively, when the user moves to the dispatch location using a bus or a taxi, management server 200 may predict the user arrival time using the traffic information (congestion information or the like) provided by traffic information server 430 or vehicle information collection server 450.

When the user arrival time to the dispatch location is predicted, management server 200 modifies the dispatch time to allow vehicle 100 to reach the dispatch location at the user arrival time and transmits the modified dispatch time to vehicle 100.

When vehicle 100 receives the modified dispatch time from management server 200, vehicle 100 searches again for the dispatch route (traveling route) of vehicle 100 from the current location to the dispatch location so as to reach the dispatch location at the dispatch time. Then, vehicle 100 moves toward the dispatch location in accordance with the dispatch route thus searched for again.

Then, when vehicle 100 reaches the designated dispatch location and the user reaches the dispatch location and confirms that vehicle 100 has reached, the user transmits a dispatch completion report from user terminal 300 to management server 200.

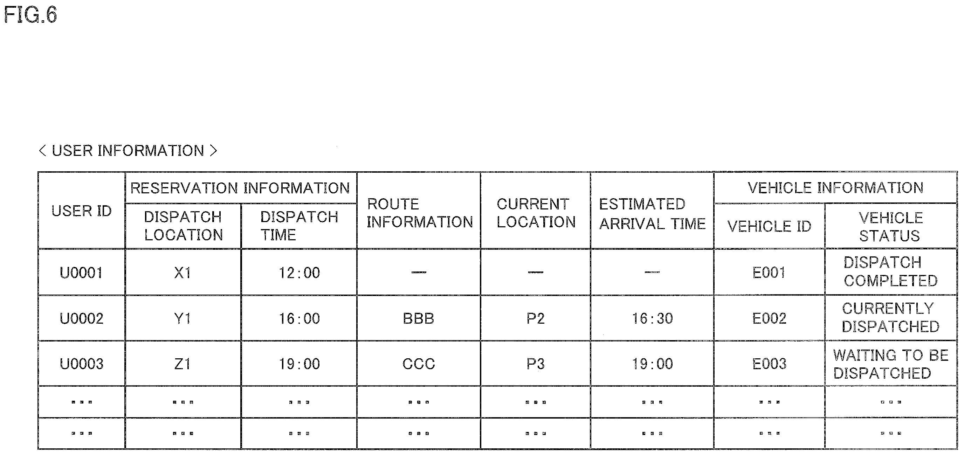

Fig. 6 shows a configuration of the data stored in user information DB 221 of management server 200. With reference to Fig. 6, an user ID is an identification number for specifying a user, and the user ID of a user who has made a reservation application is associated with: reservation information based on the reservation application from user terminal 300; route information indicating a traveling route of the user to the designated dispatch location; the current location of the user; an estimated arrival time of the user; and information of vehicle 100 to be utilized.

The reservation information includes the dispatch location and dispatch time each input when making the reservation application from user terminal 300. For example, when the user moves to the dispatch location using a train, the route information stores information indicating the user's traveling route presented by the service of transfer guidance server 410. The current location stores location information which user terminal 300 has. Accordingly, the location information of user terminal 300 is regularly transmitted from user terminal 300 to management server 200.

As described above, the expected arrival time is a user's arrival time, which is predicted based on the activity of the user, to the designated dispatch location (i.e., the user arrival location). The vehicle information includes the vehicle ID of utilized vehicle 100 and data of a vehicle status (waiting to be dispatched; currently dispatched; dispatch completed).

As one example, when the utilization reservation was made, a user having a user ID of U0002 designated the dispatch location as Y1 and designated the dispatch time as 16:00; however, the expected arrival time of the user to dispatch location Y1 is set to 16:30 based on the activity of the user (delay of the train or the like). Further, it is indicated that a vehicle 100 having a vehicle ID of E002 is assigned to the user and vehicle 100 is dispatched (is moving) to reach dispatch location Y1 at 16:30, which is the user expected arrival time.

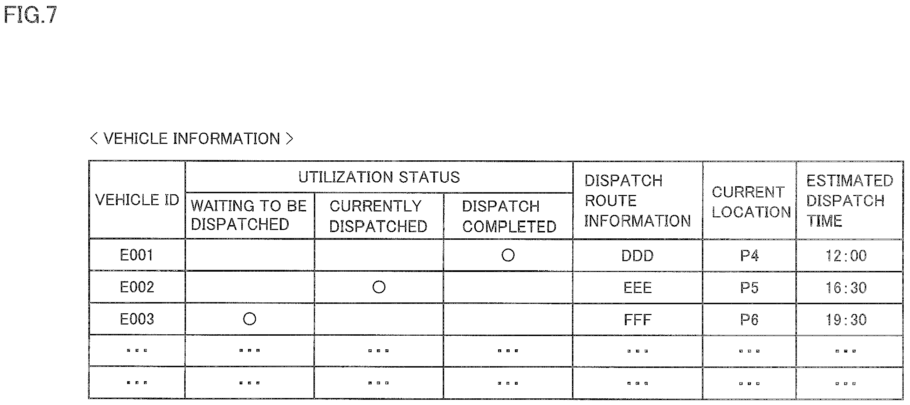

Fig. 7 shows a configuration of the data stored in vehicle information DB 222 of management server 200. With reference to Fig. 7, the vehicle ID is an identification number for specifying a vehicle 100, and is associated with various types of data such as: a utilization status of that vehicle 100; dispatch route information indicating a traveling route to the designated dispatch location; the current location of vehicle 100; an estimated dispatch time to the dispatch location; and the like.

The utilization status includes data indicating that vehicle 100 is waiting to be dispatched, is dispatched (is moving) toward the designated dispatch location, or has reached. The dispatch route information stores information indicating the traveling route of vehicle 100 and searched for to allow vehicle 100 to reach the designated dispatch location at the estimated dispatch time. The current location stores the location information of vehicle 100 specified by GPS receiver 186. The estimated dispatch time is a time at which vehicle 100 is estimated to reach the designated dispatch location, and is a dispatch time modified based on the activity of the user. That is, this estimated dispatch time corresponds to the expected user arrival time of the user information shown in Fig. 6. It should be noted that the current location of vehicle 100 is regularly transmitted from vehicle 100 to management server 200, and is stored in vehicle information DB 222.

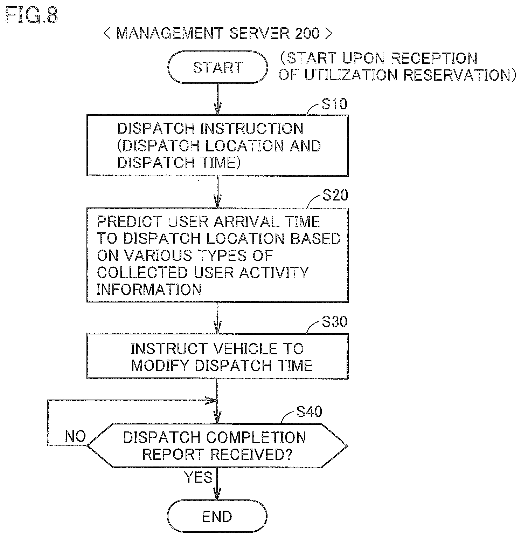

Fig. 8 is a flowchart for illustrating a procedure of processes performed by processor 230 of management server 200. The series of processes shown in this flowchart are started when an application for utilization reservation is received from user terminal 300.

With reference to Fig. 8, when management server 200 (processor 230) receives the reservation application from user terminal 300, server 200 assumes the dispatch location and dispatch time, which serve as the reservation application, as reservation information, associates them with the user ID of the user of user terminal 300, and stores them in user information DB 221. Then, management server 200 makes reference to vehicle information DB 222 to select a vehicle 100 that can be dispatched and is waiting to be dispatched, and transmits, to vehicle 100, the dispatch instruction including the designated dispatch location and dispatch time (step S10). It should be noted that as vehicle 100 that can be dispatched, there can be selected a vehicle 100 that is waiting to be dispatched and that is closest to the current location of the user, for example.

When management server 200 transmits the dispatch instruction to vehicle 100, management server 200 predicts the user arrival time to the designated dispatch location based on the location information received from user terminal 300 and the user activity information collected from transfer guidance server 410, traveling service status provision server 420, traffic information server 430, camera management system 440, and vehicle information collection server 450, and the like (step S20).

Next, management server 200 modifies the dispatch time to allow vehicle 100 to reach the dispatch location at the user arrival time predicted based on the activity of the user, and instructs vehicle 100 to modify the dispatch time (step S30). Specifically, management server 200 transmits, to vehicle 100, the dispatch time modified based on the activity of the user.

Then, when management server 200 receives the dispatch completion report from user terminal 300 as a result of the user confirming that vehicle 100 has reached the designated dispatch location (YES in step S40), management server 200 brings the process to the end.

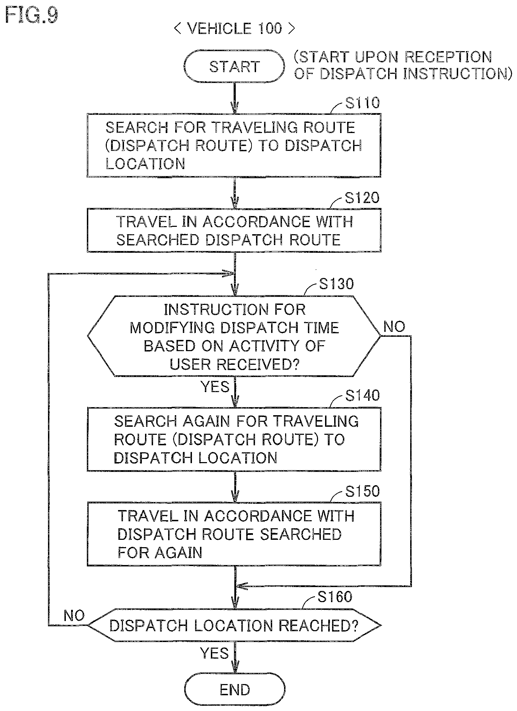

Fig. 9 is a flowchart for illustrating a procedure of processes performed by controller 160 of vehicle 100. The series of processes shown in this flowchart are started when a dispatch instruction is received from management server 200.

With reference to Fig. 9, when controller 160 of vehicle 100 receives the dispatch instruction from management server 200, controller 160 uses navigation device 185 to search for a dispatch route (traveling route) of vehicle 100 from the current location to the dispatch location so as to allow vehicle 100 to reach the designated dispatch location at the designated dispatch time (step S110). Then, controller 160 controls traveling of vehicle 100 to allow vehicle 100 to travel in accordance with the searched dispatch route (step S120).

Next, controller 160 determines whether or not an instruction for modifying the dispatch time based on the activity of the user is received from management server 200 (step S130). Specifically, it is determined whether or not the dispatch time modified based on the activity of the user is received from management server 200.

When it is determined that the instruction for modifying the dispatch time has been received (YES in step S130), controller 160 uses navigation device 185 to search again for the dispatch route (traveling route) of vehicle 100 from the current location to the dispatch location so as to allow vehicle 100 to reach the dispatch location at the modified dispatch time (step S140). Then, controller 160 controls traveling of vehicle 100 to allow vehicle 100 to travel in accordance with the dispatch route searched for again (step S150).

Then, controller 160 determines whether or not vehicle 100 has reached the dispatch location (step S160). It should be noted that also when it is determined that no instruction for modifying the dispatch time is received in step S130 (NO in step S130), controller 160 brings the process to step S160 without searching again for a route in steps S140 and S150.

When vehicle 100 has not reached the dispatch location yet (NO in step S160), the process is returned to step S130 and it is checked again whether or not the instruction for modifying the dispatch time based on the activity of the user is received. On the other hand, when it is confirmed that vehicle 100 has reached the dispatch location in step S160 (YES in step S160), controller 160 brings the process to the end.

As described above, in this first embodiment, in accordance with the arrival time of the user to the dispatching location as predicted from the activity of the user, the dispatch time for vehicle 100 is modified and vehicle 100 reaches the dispatch location at the modified dispatch time. That is, the activity of the user (delay of the train utilized by the user, the walking speed of the user, and the like) is reflected in the dispatch time. Therefore, according to the first embodiment, vehicle 100 configured to perform unmanned driving can be dispatched to reach a designated dispatch location at an appropriate time, whereby a degree of satisfaction of the user is improved.

Moreover, in this first embodiment, the activity of the user is predicted using: the location information of user terminal 300; the service status of the train utilized by the user to move to the dispatch location; the traffic information for the vehicle (bus, taxi, or the like) utilized by the user to move to the dispatch location; the location information of the user specified from the captured image of the user by the camera; and the like. Therefore, according to this first embodiment, the activity of the user can be predicted precisely.

### [Second Embodiment]

In the first embodiment above, vehicle 100 searches for the dispatch route in accordance with the dispatch time modified based on the prediction of the user activity and vehicle 100 travels in accordance with the searched dispatch route; however, management server 200 may search for the dispatch route.

The entire configuration of the dispatch system in this second embodiment is the same as the configuration of dispatch system 10 in the first embodiment shown in Fig. 1 to Fig. 4.

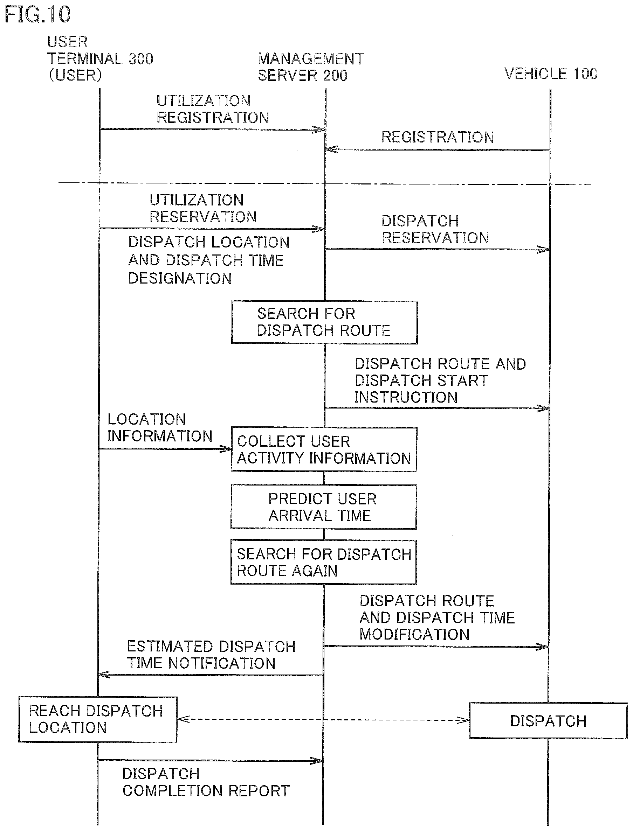

Fig. 10 is a sequence diagram showing exchange of information among respective elements (vehicle 100, management server 200, and user terminal 300) of dispatch system 10 according to the second embodiment. It should be noted that although not shown, also in the second embodiment, management server 200 actually exchanges information with transfer guidance server 410, traveling service status provision server 420, traffic information server 430, camera management system 440, and vehicle information collection server 450.

With reference to Fig. 10, as with the sequence shown in Fig. 5 in the first embodiment, the user who is to utilize dispatch system 10 needs to make utilization registration in advance and vehicle 100 also needs to be registered in advance.

As with the first embodiment, the user who is to utilize dispatch system 10 makes a utilization reservation from user terminal 300. When management server 200 receives the dispatch location and dispatch time involved in the utilization reservation from user terminal 300, management server 200 assumes the received dispatch location and dispatch time as reservation information from the user, associates them with the ID of the user, and stores them in user information DB 221.

Next, management server 200 makes reference to vehicle information DB 222 so as to transmit the dispatch reservation to a vehicle 100 that can be dispatched, and makes reference to the reservation information (dispatch location and dispatch time) stored in user information DB 221 so as to search for a dispatch route (traveling route) of vehicle 100 to allow vehicle 100 to reach the designated dispatch location at the designated dispatch time. Then, management server 200 transmits the searched dispatch route and dispatch start instruction to vehicle 100, and vehicle 100 starts to move toward the dispatch location in accordance with the searched dispatch route.

On the other hand, the user who made the utilization reservation moves to the designated dispatch location using means such as a train, a bus, a taxi, or walking. Also in this second embodiment, while the user is moving to the dispatch location, the location information is transmitted from user terminal 300 to management server 200, and the various types of information are also appropriately transmitted to management server 200 from transfer guidance server 410, traveling service status provision server 420, traffic information server 430, camera management system 440, and vehicle information collection server 450 depending on the traveling means utilized by the user, whereby the user activity information is collected.

Then, as with the first embodiment, based on the collected user activity information, management server 200 predicts the user arrival time to the dispatch location (i.e., the user arrival location) designated when making the utilization reservation. When the user arrival time to the dispatch location is predicted, management server 200 modifies the dispatch time based on the user arrival time and searches again for the dispatch route (traveling route) of vehicle 100 so as to allow vehicle 100 to reach the dispatch location at the modified dispatch time.

When the dispatch route is searched for again, management server 200 transmits, to vehicle 100, the dispatch route searched for again and the modified dispatch time so as to allow vehicle 100 to reach the dispatch location at the user arrival time predicted based on the activity of the user. Vehicle 100 changes the traveling route in accordance with the received dispatch route, and moves toward the dispatch location.

Then, when vehicle 100 reaches the designated dispatch location and the user reaches the dispatch location and confirms that vehicle 100 has reached, the user transmits a dispatch completion report from user terminal 300 to management server 200.

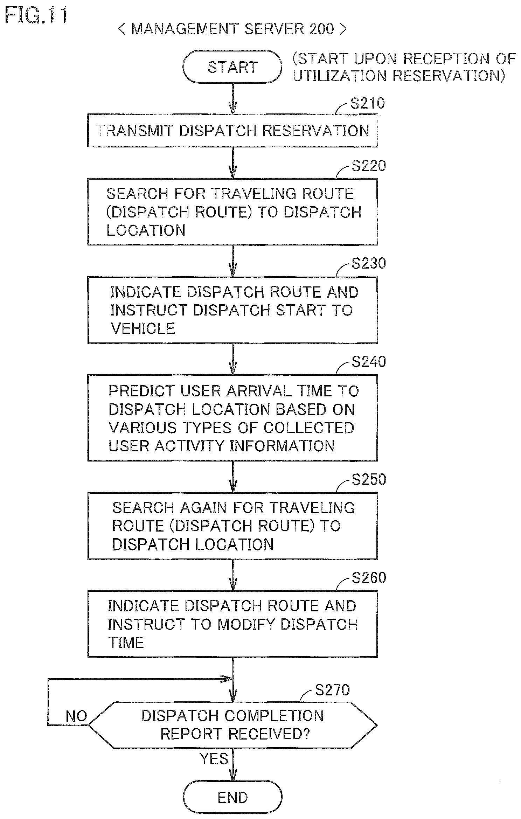

Fig. 11 is a flowchart for illustrating a procedure of processes performed by processor 230 of management server 200 in the second embodiment. The series of processes shown in this flowchart are also started when an application for utilization reservation is received from user terminal 300.

With reference to Fig. 11, when management server 200 (processor 230) receives a reservation application from user terminal 300, management server 200 selects a vehicle 100 that can be dispatched and is waiting to be dispatched, and transmits the dispatch reservation to that vehicle 100 (step S210). It should be noted that as vehicle 100 that can be dispatched, there can be selected a vehicle 100 that is waiting to be dispatched and that is closest to the current location of the user, for example.

Next, management server 200 searches for a dispatch route (traveling route) of vehicle 100 to allow vehicle 100 to reach the designated dispatch location at the designated dispatch time (step S220). Therefore, in this second embodiment, management server 200 stores data regarding map information, and regularly receives the location information of vehicle 100 from vehicle 100. Then, management server 200 transmits the searched dispatch route and dispatch start instruction to vehicle 100 (step S230).

When management server 200 transmits the dispatch route and the like to vehicle 100, management server 200 predicts the user arrival time to the designated dispatch location based on the location information received from user terminal 300 and the user activity information collected from transfer guidance server 410, traveling service status provision server 420, traffic information server 430, camera management system 440, and vehicle information collection server 450, and the like (step S240).

Next, management server 200 modifies the dispatch time based on the user arrival time, and searches again for a dispatch route (traveling route) of vehicle 100 to allow vehicle 100 to reach the dispatch location at the dispatch time (step S250). Then, management server 200 indicates the dispatch route searched for again and the modified dispatch time to vehicle 100 so as to allow vehicle 100 to reach the dispatch location at the user arrival time predicted based on the activity of the user (step S260). Specifically, management server 200 transmits, to vehicle 100, the dispatching route searched for again and the modified dispatch time.

Then, when management server 200 receives the dispatch completion report from user terminal 300 as a result of the user confirming that vehicle 100 has reached the designated dispatch location (YES in step S270), management server 200 brings the process to the end.

Also according to this second embodiment, as with the first embodiment, vehicle 100 configured to perform unmanned driving can be dispatched to reach the designated dispatch location at an appropriate time. As a result, the degree of satisfaction of the user is improved.

Although the present disclosure has been described and illustrated in detail, it is clearly understood that the same is by way of illustration and example only and is not to be taken by way of limitation, the scope of the present disclosure being interpreted by the terms of the appended claims.

## Claims

1. A movable body (100) configured to perform unmanned driving, the movable body (100) comprising:
a communication device (190) configured to receive a dispatch instruction indicating a dispatch location and a dispatch time for the movable body; and
a controller (170) configured to control the movable body to reach the dispatch location at the dispatch time,
the dispatch time being modified in accordance with an arrival time of a user to the dispatch location, the arrival time being predicted based on an activity performed by the user when the user moves to the dispatch location without riding on the movable body,
the controller being configured to control the movable body to reach the dispatch location at the dispatch time modified in accordance with the arrival time of the user to the dispatch location.

2. The movable body according to claim 1, wherein the activity of the user is predicted using at least one of location information of a mobile terminal (300) of the user, a service status of a train utilized by the user to move to the dispatch location, traffic information for a vehicle utilized by the user to move to the dispatch location, and location information of the user specified from an image of the user, the image being captured using a camera.

3. A dispatch system comprising:
a movable body (100) configured to perform unmanned driving and move in accordance with a designated dispatch location and a designated dispatch time; and
a server (200) configured to communicate with the movable body,
the server being configured to
predict an arrival time of a user to the dispatch location based on an activity performed by the user when the user moves to the dispatch location without riding on the movable body, and
modify the dispatch time for the movable body in accordance with the predicted arrival time of the user,
the movable body being configured to move toward the dispatch location to reach the dispatch location at the modified dispatch time.

4. A server comprising:
a communication device (210) configured to communicate with a movable body (100), the movable body being configured to perform unmanned driving and move in accordance with a designated dispatch location and a designated dispatch time; and
a processor (230) configured to perform first and second processes,
the first process being a process for predicting an arrival time of a user to the dispatch location based on an activity performed by the user when the user moves to the dispatch location without riding on the movable body,
the second process being a process for transmitting the dispatch time for the movable body to the movable body via the communication device, the dispatch time being modified in accordance with the predicted arrival time of the user.

5. A method for dispatching a movable body (100) configured to perform unmanned driving, the method comprising:
moving the movable body in accordance with a designated dispatch location and a designated dispatch time;
predicting an arrival time of a user to the dispatch location based on an activity performed by the user when the user moves to the dispatch location without riding on the movable body; and
moving the movable body toward the dispatch location to reach the dispatch location at the dispatch time modified in accordance with the predicted arrival time of the user.
